# EUROPEAN PATENT SPECIFICATION

(11) **EP 1 310 780 B1**
(45) Date of publication and mention of the grant of the patent: **17.12.2014**
(21) Application number: 02380233.3
(22) Date of filing: 08.11.2002
(51) Int. Cl.: G01L 5/10

(54) **Improved probe for measuring mechanical stress in cables**
Verbesserte Sonde zur Messung von mechanischer Spannung in Kabeln
Sonde ameliorée pour la mesure des contraintes mécaniques dans des câbles

(30) Priority: 08.11.2001 ES 200102474
(43) Date of publication of application: 14.05.2003
(73) Proprietor: Dinacell Electronica, S.L., 28043 Madrid (ES)
(72) Inventor: Gonzalez Gallegos, Rafael, 28529 Rivas Vaciamadrid (Madrid) (ES)
(74) Representative: Elzaburu Marquez, Alberto

(56) References cited:
- GB-A- 2 063 494
- US-A- 2 795 136
- US-A- 5 728 953
- US-A- 5 996 925

## Description

### OBJECT OF THE INVENTION

The present specification refers to a patent of invention application corresponding to an improved probe for measuring mechanical stress in cables, which permits weighing a mass hanging from it, consequently being able to limit the load levels when trying to lift masses suspended on cables, such as is the case with cranes, or a lifting apparatus, such as an elevator, where this probe will especially be incorporated.

### FIELD OF THE INVENTION

This invention is applicable within the industry dedicated to manufacturing measuring apparatuses, specifically for measuring mechanical stress on cables.

### BACKGROUND OF THE INVENTION

The probes currently in use have the drawback of being constituted of mono-block bodies where the cables by whose mechanical stress to be measured or proven are integrated by shifting.

Due to the natural shifting of cables, they tend to recover their natural trajectory which had previously been forced in order to bring them close enough to the probes, pushing them towards the point where the cables are closer together.

By Utility Model ES 1,028,045, a device is known for measuring forces on steel cables with the object of knowing the weight said cables support, which is constituted of a load probe formed by three parts, one of them being the probe constructed in steel and incorporating the assembly of an deformation sensitive electronic circuit, an anchoring piece which, for the number of bridges and size thereof, permits clamping a determined number of cables with their corresponding diameters to the load probe, and to parts, one of them located on the lower part and the other on the upper part of the load probe, which generate an arch in the trajectory of the cables, which in turn is translated into deformation for the load probe that is proportional to the stress of the cables.

By patent of invention ES 2,150,364, a measuring instrument for hanging masses is known for machines operating with hauling cables, consisting of equipment integrated on a single part, where the cable stress translator is coupled to the hauling cables, as well as the microprocessing electronics for calculating and translating the stress of the cables in their corresponding kilos of hanging masses, having an auto-calibrated system by means of the microprocessing electronic circuit, based on the outside parameters of the assembly constituted as the number of cables and diameter thereof, having a chain compensation software of the elevator.

By patent of invention WO 94/17382, a three point force sensing element is known that is intended to be fixed onto a flexible structure, such as a cable, for the purpose of measuring and controlling the load or the force laterally applied to the flexible structure, characterized by being constituted of its incorporation in the sensing element body, two half-point contrast sets, forming a complete and sheared work point, and a point which is directly related with a conditioner integrated on the sensing element.

By US patent 4,989,450, and extensometric cable is known for measuring loads and stress.

In summary, the four recovered documents correspond to devices with three support points for the cable, forcing the cable to adopt a shape that is similar to a "V", thus elastically deforming the central body wherein the transducer is arranged, with the object of achieving the generation of the electric measuring signal.

In addition, the applicant is aware of the existence of US patent 5,728,953 which describes a probe for measuring stress in cables with a body provided with support and fixation to the cable points having notches, having a machined element defining a deformation sensitive zone inside of which there are extensometric bands. US patent 2,795,136 describes a similar apparatus. British patent GB 2063494 also describes' the use of a parallelepipedic body used in a stress meter which further has different sized support points. And finally, US patent 5,996,925 describes another stress meter of the type related hereto.

However, in all of such inventions the deformation of the cable occurs in the same plane where the probe is measuring the force, and in addition, in order to install such device it is necessary to remove at least one of the support points where the cable is supported because said support points do not have a completely free end, but rather at least one of them surrounds the cable. They additionally have a more complex design.

In addition, even though the support points in the described documents can have different dimensions in some cases, they are usually fairly short given that the surround the cable; therefore, clamping them forces bringing them close to one another according to the distance at which the cables are located.

Therefore, it would be necessary to have a probe that permits a unitary placement for each cable, not requiring the forced operation for bringing the cables close to one another.

However, the applicant has no knowledge of the current existence of an invention having the features herein signaled as appropriate.

### DESCRIPTION OF THE INVENTION

The improved probe for measuring mechanical stress in cables proposed by the invention is shaped as an evident novelty within its specific field of application, on one hand permitting the probe to be equipped with reduced dimensions, being able to place a probe for each one of the cables, regardless of the fact that the cables are close to one another without the assembly increasing costs due to the simplicity of the probe.

At the same time, the invention has the advantage of having a quick placement, which results in permitting the assembly of a large number of probes in a very short time, which also results in reducing the high assembly costs.

At the same time, the invention permits comparing the load difference between cables due to the shape of the probe and the installation thereof for each one of the cables, even detecting a loose or broken cable, enabling the automatic interruption of service for safety.

The probe can be equipped with integrated electronics, which would indicate the existence of loose cables by means of a light indicator located on the probe itself, being possible to place the probes in bus for this function.

More specifically, the improved probe for measuring mechanical stress in cables is constituted of a parallelepipedic body from which support and fixation points to the cable emerge, having an internal mechanized element defining a deformation sensitive zone, where several extensometric bands are housed which change their electric resistance when the part is deformed by said deformation sensitive zone, it can therefore know the force with which the material is being deformed.

### DESCRIPTION OF THE DRAWINGS

In order to complement the description being giving and for the purpose of helping to better understand the features of the invention, a sheet of plans accompany the present specification as an integral part thereof, which, with an illustrative and non-limiting character, show the following:

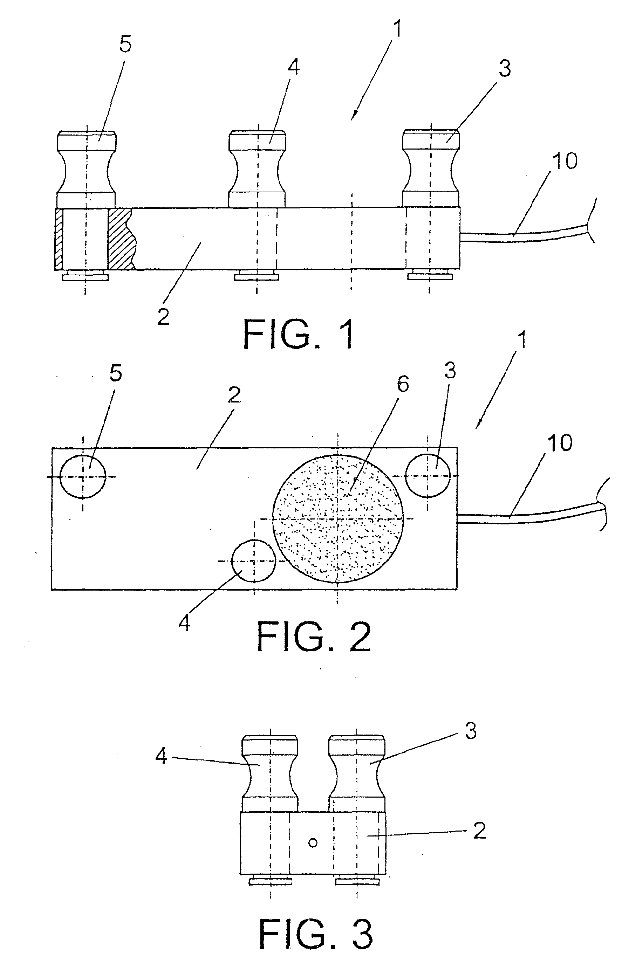

Figure 1.- Shows a partially sectioned side elevational view of the object of the invention corresponding to an improved probe for measuring mechanical stress in cables.
Figure 2.- Shows a plan view of the object shown in figure 1.
Figure 3.- Lastly shows an elevational view from one of the smaller sides of the object shown in the previous figures.

### PREFERRED EMBODIMENT OF THE INVENTION

In view of these figures, it can be seen how the improved probe (1) for measuring mechanical stress in cables is constituted of a parallelepipedic body (2) manufactured from a metallic material from which three support points (3), (4) and (5) originate for fixing it to the cable, the body (2) having a mechanized element (6) constitutive of a deformation sensitive zone, within which several extensometric bands are located (neither shown nor referenced), being necessary to indicate that said extensometric bands change their electric resistance when the part (2) is deformed by the zone (6), it therefore achieves knowing the force with which the material is being deformed.

The support points (3), (4) and (5) are generally three rigid bars, although they can unquestionably have a higher number, which protrude or emerge from one of the sides of the parallelepipedic body (2), although they could also pass through, emerging through the opposite side for the purpose of fixing the probe (1) to tow cables, or even extend the bodies of the rigid bars (3), (4) and (5) to another similar probe with the object of being able to measure the mechanical stress of an undefined number of cables that are aligned and located between both probes.

The invention is able to permit the support points (3), (4) and (5) to have different dimensions with the object of fixing the probe (1) to two very close cables, and both cables to the same side of the probe.

The support points (3), (4) and (5) minimally shift the trajectory of the cable, forcing it to follow a "V" shape whose angle tends to open when the mechanical stress increases, deforming the probe at that time in the sensitive zone (6).

For the object of achieving properly fixing the probe (1) to the cables, it has been foreseen that the fixation points (3), (4) and (5) have perimetral notches or grooves, whose purpose is to guide the cable, although to facilitate its machined and placement in the probe, the notches are perimetrally executed, as previously mentioned.

In order to facilitate assembly, tow of the support points (3), (4) and (5) can be fixed onto the body (2) of the probe (1), and the third (5) would be placed in a drill hole intended to be placed at the time of assembly.

The perimetral cable-guide notches ensure that the third support point (5) cannot be moved from its position, since the other support points (3) and (4) together with the cable define a single, third support point on a plane that is parallel to the side of the parallelepiped (2), where all the supports (3), (4) and (5) are located.

In order to obtain having the probe (1) fixed to the cable, a minimum mechanical stress on said cable is necessary, which always occurs in elevators and the like.

Inside the body (2) of the probe (1), an integrated electronics can be included, which permits sending an amplified signal, or even connecting in bus several probes with a microprocessing electronics.

It must be pointed out that this invention corresponds to an easy continuous clamping of the cable or cables in a mechanical stress meter, based on the elastic deformation of a parallelepipedic body equipped with a transducer on the basis of extensometric bands, whose clamping will be carried out without the need to force the cables close together, enabling the rapid unitary placement of the meter for each cable and the assembly of a large number of probes in a short time.

## Claims

1. Measuring probe of mechanical stress on a cable, wherein in that the measuring probe (1) comprises a body (2) made of a metallic material, at least three support points (3), (4) and (5) protruding from one side of body (2), and a machined element (6) integral to said body (2) and defining a deformation sensitive zone in body (2), support points (3) to (5) each having a perimetral groove, such that the cable can be fit within the perimetral groove of support points (3) to (5) and thus be guided by the support points into a "V" shape forming an angle configured to open as mechanical stress increases, thereby deforming the deformation sensitive zone of machined element (6).

2. Measuring probe according to claim 1, wherein support points (3), (4) and (5) are rigid bars.

3. Measuring probe according to claim 2, wherein the support points are different sizes.

4. Measuring probe according to any of the preceding claims, wherein the two support points (3), (4) are fixed to body (2) and the third support point (5) is fixed to body (2) when the cable is fit to body (2).

5. Measuring probe according to claim 3, wherein the support points number more than three.

6. Measuring probe according to any of the preceding claims; wherein machined element (6) includes various extensometric bands situated in the deformation sensitive zone.

7. Measuring probe according to claim 6, wherein body (2) includes an integrated electronic circuit that allows sending an amplified signal.

8. Measuring probe according to claim 7, wherein a microprocessor-controlled electronic circuit can be connected to several measuring probes (1).

## Patentansprüche

1. Messaufnehmer für mechanische Spannungen auf ein Kabel,
wobei der Messaufnehmer (1) Folgendes aufweist:
einen Körper (2) aus einem metallischen Material, mindestens drei Stützstellen (3, 4 und 5), die von einer Seite des Körpers (2) vorstehen, und
ein in den Körper (2) eingebautes maschinell bearbeitetes Element (6), das einen verformungsempfindlichen Bereich im Körper (2) bildet, wobei die Stützstellen (3 bis 5) jeweils eine Umfangsnut aufweisen,
so dass das Kabel innerhalb der Umfangsnuten der Stützstellen (3 bis 5) montiert werden kann und auf diese Weise durch die Stützstellen in eine V-Form geführt wird, die einen Winkel bildet, der derart ausgebildet ist, dass er sich mit zunehmender mechanischer Spannung öffnet, und dass dadurch der verformungsempfindliche Bereich des maschinell bearbeiteten Elements (6) verformt wird.

2. Messaufnehmer nach Anspruch 1,
wobei die Stützstellen (3, 4 und 5) starre Stäbe sind.

3. Messaufnehmer nach Anspruch 2,
wobei die Stützstellen unterschiedliche Größen haben.

4. Messaufnehmer nach einem der vorherigen Ansprüche,
wobei die zwei Stützstellen (3, 4) am Körper (2) befestigt sind, und die dritte Stützstelle (5) am Körper (2) befestigt ist, wenn das Kabel am Körper (2) montiert ist.

5. Messaufnehmer nach Anspruch 3,
wobei die Stützstellen mehr als drei zählen

6. Messaufnehmer nach einem der vorherigen Ansprüche,
wobei das maschinell bearbeitete Element (6) verschiedene Dehnungsmessstreifen aufweist, die in dem verformungsempfindlichen Bereich angeordnet sind.

7. Messaufnehmer nach Anspruch 6,
wobei der Körper (2) eine integrierte elektronische Schaltung aufweist, die das Senden eines verstärkten Signals ermöglicht.

8. Messaufnehmer nach Anspruch 7,
wobei eine von einem Mikroprozessor gesteuerte elektronische Schaltung an mehrere Messaufnehmer angeschlossen werden kann.

## Revendications

1. Sonde de mesure de contrainte mécanique sur un câble, dans laquelle la sonde de mesure (1) comprend un corps (2) réalisé en un matériau métallique, au moins trois points de support (3), (4) et (5) faisant saillie à partir d'un côté du corps (2), et un élément usiné (6) intégré audit corps (2) et définissant une zone sensible à la déformation dans le corps (2), les points de support (3) à (5) comportant chacun une rainure périphérique, de telle sorte que le câble puisse être adapté à l'intérieur de la rainure périphérique des points de support (3) à (5), et, par conséquent, être guidé par les points de support sous une forme de "V", formant un angle configuré de façon à s'ouvrir lorsque la contrainte mécanique augmente, de façon à déformer ainsi la zone sensible à la déformation de l'élément usiné (6).

2. Sonde de mesure selon la revendication 1, dans laquelle les points de support (3), (4) et (5) sont des barres rigides.

3. Sonde de mesure selon la revendication 2, dans laquelle les points de support sont de tailles différentes.

4. Sonde de mesure selon l'une quelconque des revendications précédentes, dans laquelle les deux points de support (3), (4) sont fixés au corps (2), et le troisième point de support (5) est fixé au corps (2) lorsque le câble est adapté sur le corps (2).

5. Sonde de mesure selon la revendication 3, dans laquelle les points de support sont sous un nombre supérieur à trois.

6. Sonde de mesure selon l'une quelconque des revendications précédentes, dans laquelle l'élément usiné (6) comprend différentes bandes extensométriques situées dans la zone sensible à la déformation.

7. Sonde de mesure selon la revendication 6, dans laquelle le corps (2) comprend un circuit électronique intégré qui permet l'envoi d'un signal amplifié.

8. Sonde de mesure selon la revendication 7, dans laquelle un circuit électronique commandé par un microprocesseur peut être connecté à plusieurs sondes de mesure (1).
